# EUROPEAN PATENT APPLICATION

(11) **EP 3 617 981 A1**
(43) Date of publication of application: **04.03.2020**
(21) Application number: 19192193.1
(22) Date of filing: 19.08.2019
(51) Int. Cl.: G06Q 30/06, G07B 15/00, G06Q 10/00, G07C 9/27, G07C 9/29

(54) **SYSTEM AND METHOD FOR ELECTRONIC ACCESS**

(30) Priority: 31.08.2018 US 201816120169
(71) Applicant: Farpointe Data, Inc., San Jose, CA 95131 (US)
(72) Inventor: BARBULESCU, Mihai, San Jose, CA California 95131 (US); MORISSETTE, Alain, San Jose, CA California 95131 (US); SORCE, Mario, San Jose, CA California 95131 (US); BIERACH, Kirk B., San Jose, CA California 95131 (US); LINDLEY, Scott E., San Jose, CA California 95131 (US)
(74) Representative: Pollard, Peter Julian

(57) **Abstract**

A method for providing electronic access to products includes receiving a request from a user at a server for a first set of products, creating a corresponding Voucher, transmitting the Voucher to a first recipient, in response to a request transmitting the First Ticket to a communications device, receiving a request initiated by the first recipient at the server for a second set of products less than or coextensive with the first set for delivery to a second recipient, creating at the server a corresponding Voucher, transmitting that Voucher to the second recipient, in response to a request transmitting the Second Ticket to a communications device, receiving at a reader site the Second Ticket, determining that the Second Ticket is valid, and in response to the determining, providing the second set of products.

## Description

### FIELD

The present disclosure relates generally to a method and system for providing electronic access to products such as goods and/or services which may include various forms of facility access.

### BACKGROUND

The present application claims priority of United States Patent Application Serial No. 16/120,169 filed August 31, 2018, the contents of which are hereby incorporated by reference as if set forth fully herein.

US 16/120,169 is a continuation-in-part of and claims the benefit under 35 U.S.C. Sec. 120 of co-pending United States Patent Application Serial No. 15/447,850 filed March 2, 2017, in the name of inventors Kirk B. Bierach, Scott E. Lindley, Mario Sorce and Mihai Barbulescu, commonly owned herewith and the contents of which are hereby incorporated by reference as if set forth fully herein.

Access to various facilities needs to be controlled and limited for security, commercial purposes and for other reasons. Such facilities, for example, include: (1) office buildings, the offices and conference rooms therein and various items within the office building such as a parking lot, file storage room, computer equipment room and the like; (2) factories and production facilities, the machinery and inventory storage areas contained therein; (3) apartments, condominiums, hotels, the individual dwelling units therein, parking lots, amenity areas such as swimming pools, tennis courts and the like; (4) entertainment venues, parking access, facility access, seat access, access to special access areas such as VIP lounges, food, drinks, souvenirs, and the like; and other facilities requiring limitations on access.

Traditionally such access control has been carried out with physical metal locks and metal keys, electronic locks controlled by fixed magnetic or RFiD cards read by card readers, printed, optically read and/or magnetically read tickets read by electronic equipment and/or by hired personnel.

Prior approaches allow little ability to modify tickets or access granted on the fly, to instantly transfer possession of tickets, to collect real time data on ticket use, or to react thereto. Such prior approaches also present problems when a person wants to transfer a ticket to another person or to attend an event with guests arriving at the event independently.

### GENERAL STATEMENTS

In accordance with one exemplary embodiment, in a system comprising a server, reader site, and a mobile computing device (MCD), a method for providing electronic access to products includes receiving a request initiated by a user at the server for a set of products (an Order), creating at the server at least one Voucher corresponding to the Order, the Voucher including a unique identification, storing the Voucher, transmitting the Voucher to a recipient, subsequently receiving at the server a request from the MCD for a ticket, the request including at least the unique identification contained in the Voucher, in response to the subsequently receiving, transmitting a Ticket corresponding to the Voucher and the Order to the MCD, receiving at the reader site the Ticket, determining that the Ticket is valid, and in response to the determining, providing the products.

The foregoing overview is merely a summary and thus may contain simplifications, generalizations and omissions of detail. Those persons of ordinary skill in the art will appreciate that the overview is illustrative only and is not intended to be in any way limiting.

### BRIEF DESCRIPTION OF THE DRAWINGS

The accompanying drawings, which are incorporated into and constitute a part of this specification, illustrate one or more exemplary embodiments and, together with the description of the exemplary embodiments, serve to explain the principles and implementations of the invention.

In the drawings:
FIG. 1 is a system block diagram illustrating a computer system configured for implementing at least one of a method, system and software in accordance with exemplary embodiments.
FIG. 2 is a system block diagram illustrating a portion of a data communications network coupling some of the various components contemplated herein.
FIG. 3 is a process flow diagram illustrating a portion of the process and method in accordance with an embodiment.
FIG. 3A is a process flow diagram further illustrating a process and method of the embodiment illustrated in FIG. 3.
FIG. 4 is a process flow diagram illustrating a process and method in accordance with another embodiment.
FIG. 5 is a process flow diagram illustrating a process and method in accordance with another embodiment from the point of view of the owner of a product.
FIG. 6 is a process flow diagram illustrating a process and method in accordance with another embodiment from the point of view of the consumer of a product.
FIG. 7 is a process flow diagram illustrating a process and a method in accordance with another embodiment from the point of view of a consumer of a product using/obtaining the product associated with a ticket.
FIG. 8 is a process flow diagram illustrating a process and a method in accordance with another embodiment wherein a consumer of a product and the provider of the product utilize independent processes so that the product may be consumed anonymously by the consumer.
FIG. 9 is a schematic/process flow diagram illustrating a process and a method in accordance with another embodiment wherein a tenant of a facility having a Ticket for access thereto is enabled to issue Sub-Tickets to Visitors to the Facility.
FIG. 10 is a process flow diagram illustrating a portion of the process and method in accordance with an embodiment.
FIG. 11 is a process flow diagram illustrating a portion of the process and method in accordance with an embodiment.

### DETAILED DESCRIPTION

Exemplary embodiments are described herein in the context of a method and system for electronic access. Those of ordinary skill in the art will realize that the following description is illustrative only and is not intended to be in any way limiting. Other embodiments will readily suggest themselves to such skilled persons having the benefit of this disclosure. Reference will now be made in detail to implementations of the exemplary embodiments as illustrated in the accompanying drawings. The same reference indicators will be used to the extent possible throughout the drawings and the following description to refer to the same or like items.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

References herein to "one embodiment" or "an embodiment" or "one implementation" or "an implementation" means that a particular feature, structure, part, function or characteristic described in connection with an exemplary embodiment can be included in at least one exemplary embodiment. The appearances of phrases such as "in one embodiment" or "in one implementation" in different places within this specification are not necessarily all referring to the same embodiment or implementation, nor are separate and alternative embodiments necessarily mutually exclusive of other embodiments.

In accordance with this disclosure, the components, process steps, and/or data structures described herein may be implemented using various types of operating systems, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein.

In accordance with the claims associated with this disclosure, the following terms have the following meanings.

App - An "App" is an application program configured to run under the operating system of a Mobile Computing Device.

Goods and/or Services - Goods and/or Services are the goods and/or services (also sometimes referred to as "Products" intended to be sold via the Server and delivered in response to presentation of a "Ticket". The term is intended to include conventional goods and services of all types including, for example, access to various facilities.

Mobile Computing Device (MCD) - A mobile device such as a pad device or smart mobile telephone having input and output interfaces and capable of running an App with which it may communicate with a Reader Site, receive a Voucher, and request and receive a Ticket.

Order - a set of one or more Goods and/or Services (Products) requested by a User from the Server. This may represent a purchase by the User or the Products may be provided at no charge to the User.

Products - a set of one or more Goods and/or Services.

Reader Site - a location at which one or more devices capable of communicating with a Mobile Computing Device running an App is located. Products are provided at the Reader Site in response to reading and verifying the Ticket on the Mobile Computing Device. For example, a reader site could be located at a door or gate, a vending machine, an entrance to a venue, a restaurant or bar, a shop, or the like.

Recipient - when the Order is placed with the Server by the User the User may designate a "Recipient" to receive the Voucher corresponding to the Order. The User may be the Recipient or the User may designate another person or entity to be the Recipient or, in turn, the Recipient may designate another person to be the Recipient. The recipient is sometimes referred to herein as a Consumer.

Server - the Server as used herein is intended to broadly encompass one or more devices accessible over a digital communications network and capable of performing the acts described herein. For example, a web server, a cloud server, and other forms of servers are intended to be encompassed by the term "Server".

Storing - Storing simply means remembering. This can be accomplished by using some appropriate form of memory device associated with and/or connected to the Server.

Ticket - a Ticket is an electronic representation of the Order for Products. It is sent to the MCD in response to a request containing the unique identification information in the Voucher.

Unique Identification - The Unique Identification is, in essence, a serial number or other relatively unique identification value used to associate the Voucher in a 1 to 1 manner with a corresponding Order on the Server.

User - a User is the person or other entity that initiates the Order.

User Access Device - a User Access Device or "UAD" is a device with which the User may communicate with or access the Server to place the Order. It may be the MCD to which the Voucher is ultimately transmitted, or it may be another MCD or a laptop or other type of computing/communication device. For example, it may be a kiosk-type computing device located in a public area. Alternatively, it may be a device linked to the server with which someone in communication with the user may enter an Order as at a service counter, call center and the like.

Voucher - a Voucher is, in essence, a receipt for the Order. It includes a Unique Identification with which the Server may associate the corresponding Order.

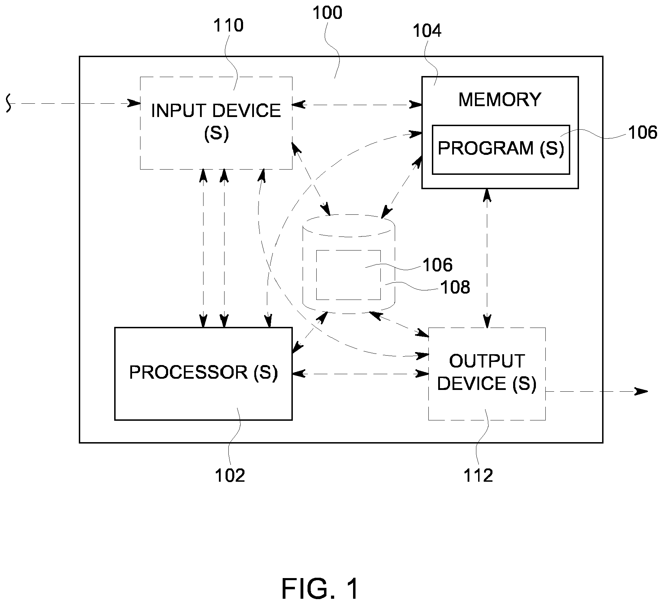

FIG. 1 depicts a device or a computer system (sometimes referred to herein as a "server") 100 comprising one or more processors 102 and a memory 104 storing one or more programs 106 for execution by the one or more processors 102.

In some embodiments, the server 100 can further comprise a non-transitory computer-readable storage medium 108 storing the one or more programs 106 for execution by the one or more processors 102 of the server 100.

In some embodiments, the server 100 can further comprise one or more input devices 110, which can be configured to send or receive information to or from any one from the group consisting of: an external device (not shown), the one or more processors 102, the memory 104, the non-transitory computer-readable storage medium 108, and one or more output devices 112.

In some embodiments, the server 100 can further comprise one or more output devices 112, which can be configured to send or receive information to or from any one from the group consisting of: an external device (not shown), the one or more processors 102, the memory 104, and the non-transitory computer-readable storage medium 108.

The server 100 is configured to carry out the steps of the processes and method described hereinbelow in more detail. In so configuring the server 100 it is provided with programs and modules which correspond to a set of instructions for performing a particular function. These modules and programs (i.e., sets of instructions) need not be implemented as separate software programs, procedures or modules, and thus various subsets of these modules may be combined or otherwise re-arranged in various embodiments. In some embodiments, memory may store a subset of the modules and data structures identified above. Furthermore, memory may store additional modules and data structures not described above.

The illustrated aspects of the disclosure may also be practiced in distributed computing environments where certain tasks are performed by remote processing devices that are linked through a communications network. In a distributed computing environment, program modules can be located in both local and remote memory storage devices.

Moreover, it is to be appreciated that various components described herein can include electrical circuit(s) that can include components and circuitry elements of suitable value in order to implement the embodiments of the subject innovation(s). Furthermore, it can be appreciated that many of the various components can be implemented on one or more integrated circuit (IC) chips. For example, in one embodiment, a set of components can be implemented in a single IC chip. In other embodiments, one or more of respective components are fabricated or implemented on separate IC chips.

What has been described above includes examples of the embodiments of the present invention. It is, of course, not possible to describe every conceivable combination of components or methodologies for purposes of describing the claimed subject matter, but it is to be appreciated that many further combinations and permutations of the subject innovation are possible. Accordingly, the claimed subject matter is intended to embrace all such alterations, modifications, and variations that fall within the spirit and scope of the appended claims. Moreover, the above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In particular and in regard to the various functions performed by the above described components, devices, circuits, systems and the like, the terms used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the claimed subject matter. In this regard, it will also be recognized that the innovation includes a system as well as a computer-readable storage medium having computer-executable instructions for performing the acts and/or events of the various methods of the claimed subject matter.

The aforementioned systems/circuits/modules have been described with respect to interaction between several components/blocks. It can be appreciated that such systems/circuits and components/blocks can include those components or specified subcomponents, some of the specified components or sub-components, and/or additional components, and according to various permutations and combinations of the foregoing. Subcomponents can also be implemented as components communicatively coupled to other components rather than included within parent components (hierarchical). Additionally, it should be noted that one or more components may be combined into a single component providing aggregate functionality or divided into several separate sub-components, and any one or more middle layers, such as a management layer, may be provided to communicatively couple to such sub-components in order to provide integrated functionality. Any components described herein may also interact with one or more other components not specifically described herein but known by those of skill in the art.

In addition, while a particular feature of the subject innovation may have been disclosed with respect to only one of several implementations, such feature may be combined with one or more other features of the other implementations as may be desired and advantageous for any given or particular application. Furthermore, to the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), a combination of hardware and software, software, or an entity related to an operational machine with one or more specific functionalities. For example, a component may be, but is not limited to being, a process running on a processor (e.g., digital signal processor), a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers. Further, a "device" can come in the form of specially designed hardware; generalized hardware made specialized by the execution of software thereon that enables the hardware to perform specific function; software stored on a computer-readable medium; or a combination thereof.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Computing devices typically include a variety of media, which can include tangible computer-readable storage media and/or communications media, in which these two terms are used herein differently from one another as follows. Tangible computer-readable storage media can be any available storage media that can be accessed by the computer, is typically of a non-transitory nature, and can include both volatile and nonvolatile media, removable and non-removable media. By way of example, and not limitation, tangible computer-readable storage media can be implemented in connection with any method or technology for storage of information such as computer-readable instructions, program modules, structured data, or unstructured data. Tangible computer-readable storage media can include, but are not limited to, RAM (random access memory), ROM (read-only memory), PROM (programmable read-only memory), EEPROM (electrically eraseable programmable read-only memory), flash memory, jump drives, USB (universal serial bus) drives (and the like) or other memory technology, compact disk (CD and CD-ROM), digital versatile disk (DVD and DVD-ROM), paper card, paper tape or other information storage media, magnetic cassettes, magnetic tape, magnetic disk storage or other magnetic storage devices, or other tangible and/or non-transitory media which can be used to store desired information. Tangible computer-readable storage media can be accessed by one or more local or remote computing devices, e.g., via access requests, queries or other data retrieval protocols, for a variety of operations with respect to the information stored by the medium.

On the other hand, communications media typically embody computer-readable instructions, data structures, program modules or other structured or unstructured data in a data signal that can be transitory such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

In view of the exemplary systems described above, methodologies that may be implemented in accordance with the described subject matter will be better appreciated with reference to the flowcharts of the various figures. For simplicity of explanation, the methodologies are depicted and described as a series of acts. However, acts in accordance with this disclosure can occur in various orders and/or concurrently, and with other acts not presented and described herein. Furthermore, not all illustrated acts may be required to implement the methodologies in accordance with the disclosed subject matter. In addition, those skilled in the art will understand and appreciate that the methodologies could alternatively be represented as a series of interrelated states via a state diagram or events. Additionally, it should be appreciated that the methodologies disclosed in this specification are capable of being stored on an article of manufacture to facilitate transporting and transferring such methodologies to computing devices. The term article of manufacture, as used herein, is intended to encompass a computer program accessible from any computer-readable device or storage media.

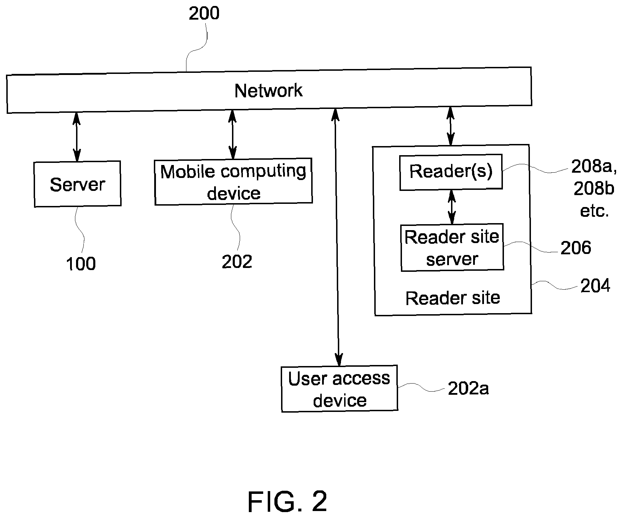

FIG. 2 is a system block diagram illustrating a portion of a data communications network coupling some of the various components contemplated herein. This reflects a typical scenario wherein a computer system or "server" 100 such as a web server or multiple web servers provides computer functionality to a user's mobile computing device 202 (MCD) or a User Access Device (UAD) 202a over a data communications network 200 such as the Internet or a private data communications network or a combination of two or more such networks. The MCD 202 and/or UAD 202a may be coupled via wires and/or wirelessly to the data communications network 200 so that the user may access the server 100.

The system also includes a reader site 204. A purpose of the system is to provide electronic access to goods and/or services. The goods and/or services may comprise one or more of access to a venue (such as passage through a locked or monitored doorway or gateway at an access-controlled facility such as an office building or an entertainment venue), access to parking facilities, provision of goods and/or optional services at the venue (such as meals and programs at an entertainment venue, for example), access to pass through additional locked or monitored doorways or gateways at the facility (such as certain file rooms, conference rooms, or other secured rooms at an office building or VIP areas or other secured areas within the entertainment facility).

The person possessing the MCD 202 and/or UAD 202a is also referred to as a user and the MCD 202 may be one or more of a smart cellular telephone or a similar device capable of being connected to a data telecommunications network. Such devices may include pad computers, watch computers, other wearable computers, laptops, portable computers and other devices with similar capabilities which are now or may become available in the future. Such devices may be carried by, worn by or implanted in the user. In one embodiment, the MCD runs an "app" or application program under its operating system in order to carry out the functions described herein although other approaches to carrying out these functions are also contemplated herein including the use of a device which is specifically configured and used for the purposes described herein.

The server 100 is any suitable computing device or system of devices connected to a data communications network 200 and configured to provide vouchers and tickets as defined herein in response to requests received from the user's MCD 202 or a User Access Device (UAD) 202a.

The reader site 204 is any suitable device or collection of devices configured to interact with the user's MCD to read the data from a ticket stored thereon, optionally update that information, optionally transmit that information and optionally transmit additional information to a server, determine if the ticket is authentic, determine if the ticket has not already been presented or has expired (if good for multiple uses and/or for a period of time), and, in appropriate circumstances, provide access to goods and/or services. The reader site 204 includes at least one device 208a, 208b, etc. configured to communicate with the user's MCD (a "reader") to obtain the ticket and/or its associated information and optionally a local reader site server 206 which may, for example, manage a plurality of readers 208a, 208b - for example, in a situation where a facility has a number of entrances and each entrance has its own reader. Alternatively, server capability may be built into the reader devices 208a, 208b themselves for communication directly back to server 100 or for storage of the information required for them to operate autonomously of server 100.

Reader site 204 may include one or more reader site servers 206 each in communication with one or more readers 208a, 208b which, in turn, are configured to communicate (preferably wirelessly) with a MCD 202. Reader site server(s) 206 may, in turn, be in communication with server 100 over data communications network 200 to receive information which would allow server(s) 206 to verify the validity of tickets provided to readers 208a, 208b and/or to update server 100 on ticket utilization should that be desirable.

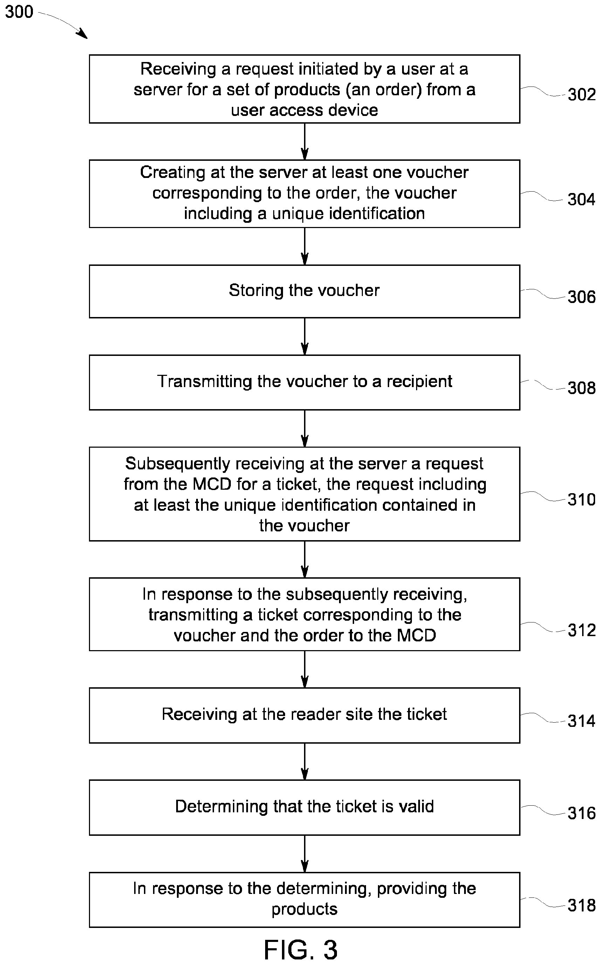

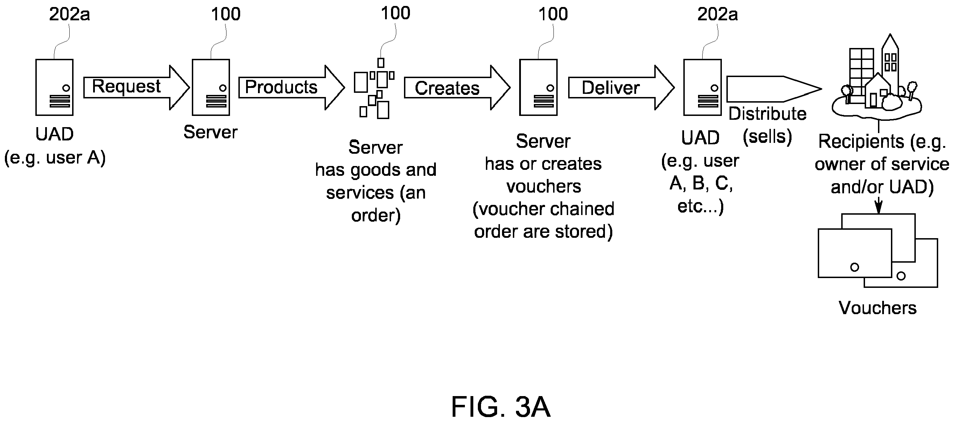

FIG. 3 is a process flow diagram illustrating a process or method in accordance with one embodiment. Turning now to FIG. 3, in accordance with one exemplary embodiment, a method or process 300 is conducted as follows: At block 302 a request is initiated by a user to the server 100 for a set of Products comprising goods and/or services (an Order). The UAD 202a may be a Mobile Communications Device (MCD) such as a smart cellular telephone, a laptop, pad computer, kiosk computing device, or the like. Similarly, the UAD 202a may be terminal equipment operated by a vendor in response to a more physical transaction such as a counter or service center transaction or the like. Communication between UAD 202a, MCD 202 and the server may be carried out in a conventional wired or wireless manner as well known to those of ordinary skill in the art.

At block 304 the server creates at least one Voucher (or assigns a pre-existing voucher) to correspond to the Order and the Voucher has a unique identification such as a unique value or number. In this way, there is a one-to-one correspondence between the Voucher with the Unique Identification and the Order (or a plurality of Vouchers and portions of the Order).

In accordance with an alternative embodiment the Voucher may be associated with the Order without the need for the user to communicate directly with Server 100. For example, a user could appear at a vendor site and be served by a human attendant who would enter the requisite information into Server 100 via a UAD 202a - but in this case the UAD would be a terminal or some other device connecting the attendant to the Server 100 rather than the user to the Server 100. Similarly, the Order could be emailed by the user and manually or automatically uploaded to the Server in a conventional manner.

At block 306 the Voucher (now corresponding to the Order) is stored - either locally at the Server or in some other manner. For example, the Voucher could have been pre-stored and then simply modified to correspond to the Order - so the concept of "storing" is intended to encompass this approach as well.

At block 308 the Voucher is transmitted to a recipient optionally designated by the User. For example, the recipient may be the User. Alternatively, the User may send the Voucher or cause the Voucher to be sent to another person or entity or persons or entities as might occur in the case of a gift or an invitee.

At block 310 a MCD furnished with the Voucher requests the actual Ticket associated with the Voucher and the Order from the Server. This may occur at any time after the Voucher is associated with the Order. The request needs to include the unique identification from the Voucher (or a substitute therefor such as an encrypted version thereof).

At block 312, in response to the request at block 310, the Server transmits the Ticket (or Tickets) associated with the Voucher to the MCD. The Ticket will be stored in a manner accessible by the MCD 202 (e.g., locally, or on a cloud storage device) so that it may be retrieved when needed by an application program running on the MCD 202.

At block 314, someone in possession of the MCD with the Ticket(s) presents the MCD at a Reader Site to a reader in order to attempt to obtain the Products associated with the Order.

Wireless communication between the MCD 202 and other devices such as server 100 or readers 208a, 208b, for example, may be carried out using a variety of technologies now available or contemplated for future MCD use. These include data communication over a telephone service network, "texting" or use of the standard SMS protocol, near field communications technology available on some cell phones, blue tooth protocol communications, "BLE" and similar communications protocols and technologies providing two-way data communications capabilities.

It is also contemplated that MCD 202 may communicate with a reader 208a, 208b using visual or audible communications techniques. For example, for visual communications the display screen of the MCD 202 may be used to display a barcode or a two-dimensional bar code or a similar optically encoded image useable for communicating data. Similarly, a series of images may be displayed to the same effect. An audio signal encoded with data may be used as may an amplitude modulated light signal from a light emitting diode on the MCD or from its display. All such communications techniques may operate to communicate from MCD 202 to reader 208a, 208b or vice versa.

At block 316, the reader at the Reader Site reads the Ticket from the MCD and carries out a verification process to determine if the Ticket is valid for the Product(s) desired. The Reader Site may be pre-loaded with information with which to verify the Ticket or it may communicate with the Server after reading the Ticket.

At block 316, the Reader Site determines that the Ticket is valid for the Product(s) desired. (Alternatively, of course, it may determine that the Ticket is not valid and optionally offer suggestions to the presenter of the Ticket via some sort of display or other audible or visually perceivable interface on how to proceed next to gain the desired access).

At block 318, the Product(s) are provided.

FIG. 3A is a process flow diagram illustrating a portion of the process and method in accordance with the embodiment of FIG. 3.

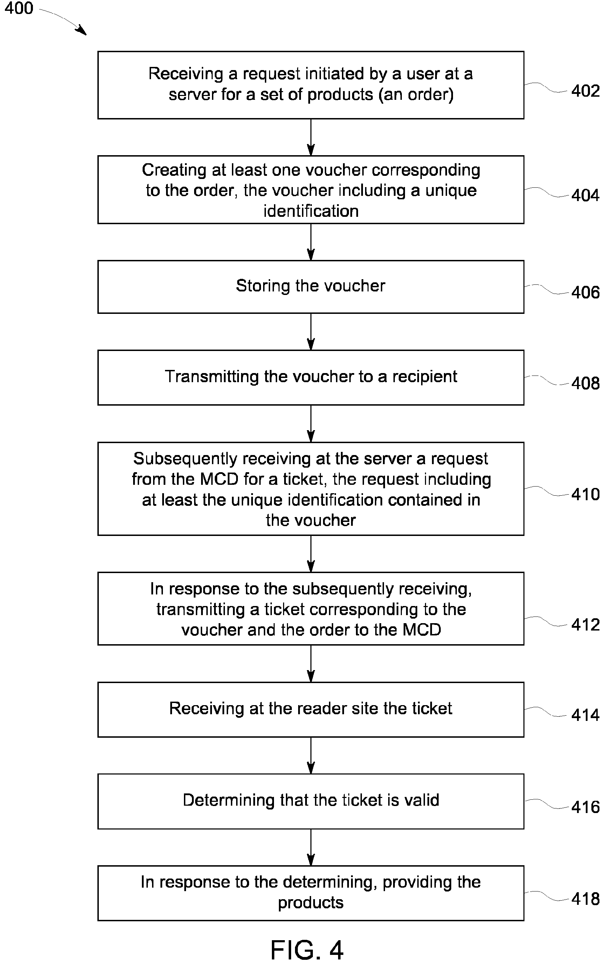

FIG. 4 is a process flow diagram illustrating an alternative process or method in accordance with another embodiment. Turning now to FIG. 4, in accordance with one exemplary embodiment, a method or process 400 is conducted as follows: At block 402 a request is initiated by a user at Server 100 for a set of Products comprising goods and/or services (an Order).

At block 404 the server creates at least one Voucher (or assigns a pre-existing voucher) to correspond to the Order and the Voucher has a unique identification such as a unique value or number. In this manner, there is a one-to-one correspondence between the Voucher with the Unique Identification and the Order (or a plurality of Vouchers and portions of the Order).

In accordance with an alternative embodiment the Voucher may be associated with the Order without the need for the user to communicate directly with Server 100. For example, a user could appear at a vendor site and be served by a human attendant who would enter the requisite information into Server 100 via a UAD 202a - but in this case the UAD would be a terminal or some other device connecting the attendant to the Server 100 rather than the user to the Server 100. Similarly, the Order could be emailed by the user and manually or automatically uploaded to the Server in a conventional manner.

At block 406 the Voucher (now corresponding to the Order) is stored - either locally at the Server or in some other manner. For example, the Voucher could have been pre-stored and then simply modified to correspond to the Order - so the concept of "storing" is intended to encompass this approach as well.

At block 408 the Voucher is transmitted to a recipient optionally designated by the User. For example, the recipient may be the User. Alternatively, the User may send the Voucher or cause the Voucher to be sent to another person or entity or persons or entities as might occur in the case of a gift or an invitee.

At block 410 a MCD furnished with the Voucher requests the actual Ticket associated with the Voucher and the Order from the Server. This may occur at any time after the Voucher is associated with the Order. The request needs to include the unique identification from the Voucher (or a substitute therefor such as an encrypted version thereof).

At block 412, in response to the request at block 410, the Server transmits the Ticket (or Tickets) associated with the Voucher to the MCD. The Ticket will be stored in a manner accessible by the MCD 202 (e.g., locally, or on a cloud storage device) so that it may be retrieved when needed by an application program running on the MCD 202.

At block 414, someone in possession of the MCD with the Ticket(s) presents the MCD at a Reader Site to a reader in order to attempt to obtain the Products associated with the Order.

At block 416, the reader at the Reader Site reads the Ticket from the MCD and carries out a verification process to determine if the Ticket is valid for the Product(s) desired. The Reader Site may be pre-loaded with information with which to verify the Ticket or it may communicate with the Server after reading the Ticket. The Reader Site determines that the Ticket is valid for the Product(s) desired. (Alternatively, of course, it may determine that the Ticket is not valid and optionally offer suggestions to the presenter of the Ticket via some sort of display or other audible or visually perceivable interface on how to proceed next to gain the desired access).

At block 418, the Product(s) are provided.

In accordance with one embodiment, for example, the Ticket could have stored thereon information defining additional acts that may be required in order to gain access, such as presentation of a finger to a fingerprint reader, entry of a PIN in a PIN reader, or acceptance by some other type of biometric and/or photographic reader device. In such a case, access would not be granted until the Ticket was presented and the additional act or acts were successfully completed and the results verified. The desired information could be stored in encrypted form on the Ticket, or not, as dictated by the security requirements of the venue.

Some examples of specific approaches to creating the ticket and voucher are now described in some additional detail.

The voucher will contain a "registration" or "certificate" unique "hash" number which is immutably associated or "chained" to one or more ticket unique data. The voucher may also contain specific metaticket information associated with the ticket, e.g. seat 34, row LL, Section 405, alternatively metaticket information can be less specific, e.g. "General Admission". The voucher may be issued for a period of time, may be revoked at any time and the voucher expires once the ticket(s) have been consumed. The Voucher's uniqueness is assured by combining pseudo-random number sampling or variant generation with empirical historical data and time, which, enables the generation of a unique set of number which has an elastic distribution, non-repetitive numbers and with a very low probability of collision. For example, if we have 1.71 X 10e17 outstanding vouchers (160-bit hash value) the Odds of a collision is 1 in 100 trillion. An example of a voucher number representation can be case sensitive alpha-numeric, e.g. Ab12-CH34-xXp1-We8F.

The ticket information can either be visible and included as reference within the voucher or be an encrypted message of variable length which only the reader site 208, can decrypt and interpret. The data content of the message is structured such that the reader site 208 can extract access information that it authenticates with the reader server at the reader site. In one example, for example for an office building, an embodiment the ticket message data might contain an employee identifier, e.g., a badge number that can be read out at the reader site and matched to the valid badges at the site. What makes the process of securely delivering the ticket to the reader site 200, is the concept of "containers" and the conditions (transmission) by which, either we store the ticket into the containers (mobile device writes into it) or extract the ticket from the container (the reader site 208 reads from it). The containers themselves and, transmission of thereof, are, in one embodiment, encrypted using standard algorithms, e.g. AES-256.

Tickets may additionally include metadata which may, for example, identify a vendor or company owning the facility to which the ticket is applicable, the site or sites to which it applicable, the reader or readers to which it is applicable, valid dates and/or times to which it is applicable, valid access modes to which it is applicable and, potentially, additional information. The metadata may be used to additionally limit access and/or to record information locally to the reader 208a, 208b in response to a request for access and/or a grant of access.

Metadata may, for example, be attached to a Ticket to provide personal at the venue with information which could be used to improve the experience of the Ticket user at the venue. Alternatively, or additionally such metadata may be used to keep a record of access embedded in the Ticket which could be read at the reader site and utilized in some fashion.

Tickets (including associated metadata) may be updated after issuance in a number of ways, for example, updates may be issued to the MCD 202 over the data communications network 200. Updates may be received when the MCD 202 is presented to a reader 208a, 208b, and the like. Updates may include such items as: an access valid date may be changed as when an event has a change of date, an access date range may be extended or otherwise changes as when an employment arrangement is modified, access times may be changed as appropriate, readers for which access is granted may be changed from time to time as the user associated with the MCD 202 has more or less need for access to various areas, additional items may be authorized as when a user purchases extras to go along with, for example, an entertainment venue ticket, e.g., parking, programs, food, VIP lounge access, and the like.

Some examples of particular ways to use the presently disclosed embodiments are presented now.

CONDOMINIUM/APARTMENT/HOTEL USE CASE -- The approach described herein may be utilized in connection with, for example, a condominium development, apartment building or hotel. The Ticket could be set up to permit and disallow the use of certain facilities. For example, a youngster with a Ticket might be disallowed from entering the pool or spa area during certain times of the day when a life guard is not present, residents might be disallowed from access to the tennis courts if they had not paid a supplemental charge for access, and the like. Obviously normal access to doors, gates, garages and the like could be included as appropriate for a particular user.

MULTI-UNIT DEVELOPMENT VISITOR USE CASE - The approach described herein may be utilized in connection with, for example, a condominium development, apartment building, hotel, office building or the like ("multi-unit development"). Frequently it is desirable for a resident or "tenant" of a multi-unit development to be able to provide temporary access to "Visitors" such as friends, family, service providers (such as maintenance personnel, health care workers, pet care workers and the like) and package delivery personnel seeking to deliver a package to an individual or individuals at a multi-unit development. In performing such a delivery it may be desirable to provide delivery personnel or equipment (such as robotic delivery devices) with temporary or periodic access to areas within the multi-unit development such as common areas and/or specific rooms or suites. Since the knowledge associated with the Visitor will generally be held by a tenant rather than a landlord or "Facility Manager" (as used herein) it may be desirable to allow the tenant to issue a temporary or recurring Ticket to a Visitor to provide the Visitor with access as desired or required. In accordance with one embodiment, the Facility Manager in a first instance provides an initial Ticket to the tenant authorizing the access desired (e.g., to a room in an office suite of the facility). The tenant may then order a new Ticket (e.g., to provide a Visitor with access) by reference to the old Ticket via the server (e.g., using a UAD or an MCD). The server, by referencing the old Ticket can determine that the tenant has permission to issue the new Ticket subject to whatever restrictions were imposed by the Facility Manager in the first instance and any restrictions imposed on Visitors by the Facility Manager (these may vary by tenant). For example, the Facility Manager may require notification and permission from the Facility Manager or some other entity prior to issuance of a new Ticket; time limits may be imposed; quantity and quantity per unit time limits may be imposed; notification requirements to one or more individuals may be imposed; and the like. Alternatively, the Facility Manager may impose no requirements, effectively pre-authorizing all such activity. Advantages of this approach include the ability to have the tenant directly request and cause the issuance of such Tickets, the ability to record Ticket grants and access used, the ability to cancel or expire the Tickets without the need to collect physical keys/cards.

In the various scenarios discussed below in connection with the MULTI-UNIT DEVELOPMENT VISITOR USE CASE there are three primary players: the resident, occupant or "Tenant", The landlord or "Facility Manager" and the guest, service provider, delivery person or "Visitor".

Initially the Facility Manager will grant the Tenant access to one or more areas in connection with, for example, a lease. The various areas are typically secured by doors with access control devices deployed thereon. Areas may include specific rooms in a facility, common areas such as garages, swimming pools, party rooms, storage areas, and the like. Some or all of the access control devices may be used with a mobile application on a MCD. In all cases the Facility Manager retains the ability to provide or revoke access at all times. An electronic database associated with the access control devices will record user identification, time and access control device identification associated with each access to an area. The mobile application will distinguish between Tenant users and Visitor Users. A user of a mobile application may be a Tenant for some areas and a Visitor for other areas. A Visitor may not generally create additional access rights or Tickets although that capability could be provided if desired and appropriate under the circumstances. A Tenant may create additional access rights or Tickets subject to whatever rules are put in place by the Facility Manager. The mobile application may show graphically the areas or rooms to which the user has access and may indicate whether the access is as a Tenant or as a Visitor.

When the Tenant wants to permit access for a Visitor the Tenant uses the mobile application on the MCD to issue an authorization request for a mobile key (Ticket) for a Visitor. Such requests may be routed to the Facility Manager for approval. They may include an identification of the Visitor and the purpose for the requested access. They may include areas/rooms for which access is requested and a time period (both during the day and in terms of calendar dates) for which access is requested. Tickets operate as described elsewhere herein. They are unique and will have a status associated with them, such as: Pending (waiting for authorization); Denied (Authorization refused by Facility Manager); Granted (authorized by Facility Manager) Active (Granted and Visitor has received the Ticket on his/her MCD); Deactivated (revoked by the Facility Manager or Tenant); and Expired (the time for validity of the Ticket has passed). Other status indicators may also be used, if desired. The mobile application for the Tenant may provide a graphical indication of the extant Visitor Tickets and their respective status in dicators. The mobile application for the Visitor may provide a graphical indication of the extant Visitor Tickets possessed by the Visitor and their respective status indicators. An application (mobile or otherwise) used by the Facility Manager may provide all information associated with Tickets for the facility or facilities managed by the Facility Manager.

The Facility Manager may choose to control access for Visitor Tickets on a case by case basis, or may establish rules for automatic issuance of such Tickets if desired. For example, in some cases a Facility Manager may simply choose to have all requests automatically approved. In other cases the Facility Manager may wish to manually approve all requests and may choose to contact the Tenant by telephone or email for further details prior to approving a Visitor Ticket. Essentially any scenario may be supported with the appropriate software. Tenants and/or Visitors may be informed of a Ticket Grant/Deny decision by email, telephone text message or otherwise.

A Tenant may suspend or delete a Visitor Ticket established by the Tenant at any time through use of the mobile application. For example, if a Visitor Ticket was created for a specific event, and the event were to be cancelled or postponed, the Tenant could delete or suspend the Visitor Ticket accordingly.

A Facility Manager may likewise suspend or delete a Visitor Ticket. For example, should an employee with Visitor Tickets be terminated, the Facility Manager could then delete some or all Visitor Tickets and some or all Tenant Tickets associated with the terminated employee. Similarly, should the underlying Tenant leave or become evicted then the Facility Manager will have the ability to cancel all Tickets and Visitor Tickets associated with the former Tenant.

A Facility Manager will have access to a database containing records of all Ticket requests, grants, use and the like for conventional facilities management purposes such as auditing and tracing.

Additionally, the server, the UAD and/or one or more MCDs may be informed of the use of a Visitor Ticket (or any other Ticket) so as to enable logging of the access and/or recordation of the access (as with a video or photographic recording system) or the like.

OFFICE BUILDING/FACTORY/SCHOOL USE CASE - In the case of an office building or factory or other work place or school the access approach would be similar to that of condominiums, apartments and hotels however additional functionality could be provided - for example were a "lock down" ordered this could be integrated into the access control system to disallow use of certain ticket for certain access to be denied during the "lock down". Additional time and day restrictions might be added to a work/school place, and the like. Access to certain facilities might vary from time to time depending upon scheduling issues and the like.

PERSONALLY IDENTIFIABLE UNIQUE DIGITAL BADGING CASE - In a work, school, hospital, government, high security situation, or the like, it is sometimes desirable that people wear a badge visible to others that is, in effect, self-authenticating, such as a photo badge. When required, the ticket approach described herein could be tied to a wearable display card (or integrated with such) which would display such visually perceivable information taken from metadata stored on the Ticket and displayed while in the secure facility.

ENHANCED SECURE AUTHENTICATION CASE - In a work, school, hospital, government, high security situation, or the like, it is sometimes desirable that people provide additional identification information along with the voucher number. When required, via the MCD (app), the voucher/ticket approach described herein could prompt the User to enter personal information, e.g. name, date of birth, biometric data, which can then be validated by the server 100, prior to issuing the ticket to the user.

ENTERTAINMENT VENUE USE CASE - In the case of an entertainment venue such as, for example, a football game, a number of separate goods and services are generally desired by a person attending. For example, parking, access to the venue, access to a seat in the venue, access to possible VIP areas within the venue, programs, food, souvenirs and the like can all be presold to a user and the user's invitees so that upon arrival all of these things are taken care of without further expenditure of funds. Additionally, sometimes sports venues like to award gifts to certain attendees - this could be expedited by adding the gift to the Ticket for redemption by the Ticket holder as desired. Refunds for items not delivered could also be accommodated in this manner.

STORAGE BOX USE CASE - The approach described herein may be used to provide access to various forms of storage boxes. Such storage boxes include post office boxes at post offices and mail service facilities and apartment/condominium buildings, delivery boxes maintained by on-line sales organizations for the secure delivery of ordered items and the like. In such a case the Ticket would be used to determine whether a particular person could access the box - and optionally make that access dependent upon the contents of the box. Thus, for example, if an alcohol delivery were made, only authorized ticket holders over a certain age would be allowed access even if under other circumstances they would have access to other types of deliveries. Access would be provided to a perimeter securing the storage boxes if provided as well as to the individual box assigned to the user. Time and day limitations could be provided as desired.

VENDING MACHINE USE CASE - in the case of a vending machine, since vending machine purchase decisions are often made at the last second, the ticket could be presented, a price and purchase negotiated with the Server 100 via the vending machine, the ticket updated, and the purchase completed.

TRANSPORTATION USE CASE - the Ticket approach can be used as described above to provide ticketing on and access to various forms of transportation including air, rail, car, driverless car, subway, and the like and can be used to provide amenities such as meals and other goods along with the underlying travel service.

In accordance with additional embodiments, it is possible that more than one voucher can be associated with a particular ticket. For example, if a Ticket has been issued, a new voucher may be used to update the Ticket without actually expunging it.

It is also possible that more than one ticket may be associated with a particular voucher. This would occur if, for example, it was decided that there should be one ticket for each good or service ordered and the voucher caused the download of these multiple tickets to the MCD.

In accordance with another embodiment, at the reader site, if the Ticket were rejected for some reason, e.g., wrong date, Ticket expired, invalid Ticket, and the like, the Reader Site may optionally display a message with a visually or audibly perceivable display to the recipient instructing the recipient on how to proceed next, e.g., go home, call the security office, send an email to a specified recipient, place the Order again, renew the Ticket, and the like. In this way user frustration with access denial could be somewhat mitigated.

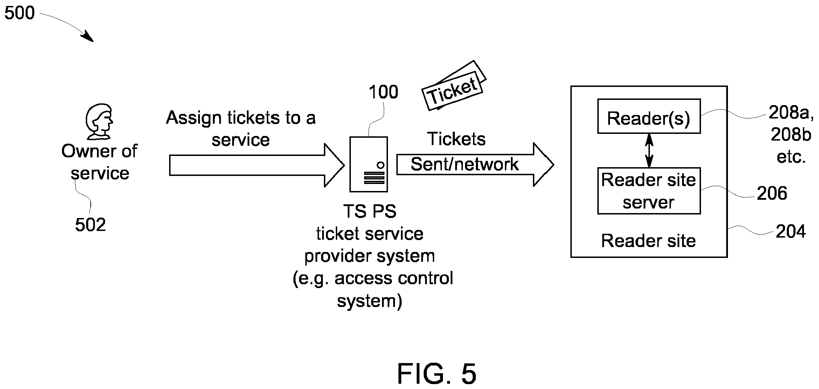

FIG. 5 is a process flow diagram illustrating a process and method 500 in accordance with another embodiment from the viewpoint of the consumer of a product. In accordance with the embodiment of FIG. 5 an owner 502 of a product such as a service assigns tickets for the product to a Ticket Service Provider System (TSPS) which is, in effect, server 100 as previously described. The tickets are then exchanged for vouchers at the server 100. The server 100 then provides vouchers to consumers who then exchange the vouchers for tickets and present the tickets via a MCD 202 at the reader site 204 in order to obtain the product.

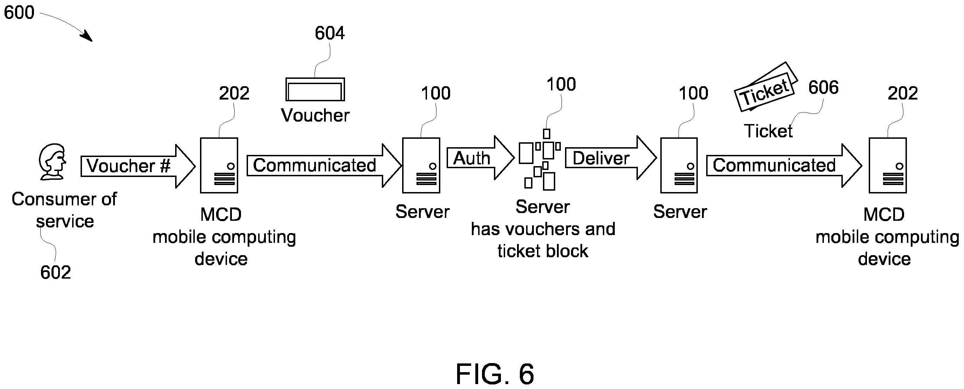

FIG. 6 is a process flow diagram illustrating a process and method 600 in accordance with another embodiment from the viewpoint of a product. In accordance with the embodiment of FIG. 6 a consumer 602 of the product uses MCD 202 to exchange a voucher 04 at server 100 for a ticket 606 which is then stored at MCD 202 for later redemption at a reader site 204.

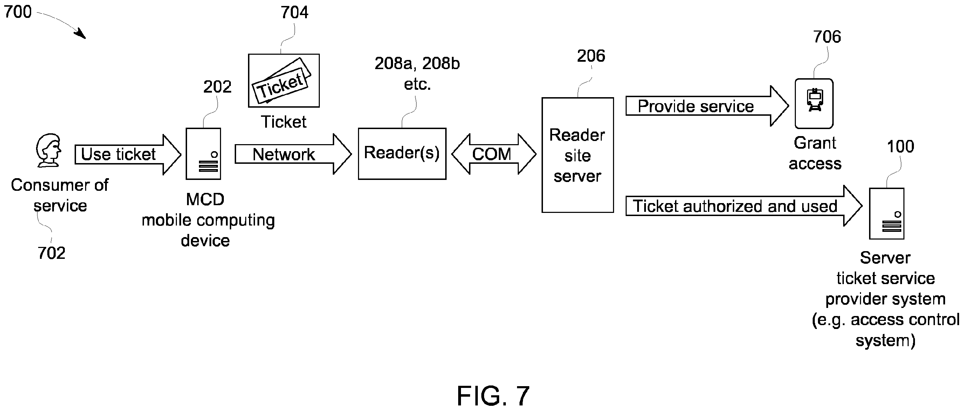

FIG. 7 is a process flow diagram illustrating a process and method 700 in accordance with another embodiment from the viewpoint of a consumer of a product using/obtaining the product associated with a ticket. In accordance with the embodiment of FIG. 7 a consumer 702 with a ticket 704 stored on his/her MCD 202 presents the MCD 202 at reader site reader 208a of reader site 204. Reader site reader 208a communicates with reader site server 206 and/or server 100 to authorize the ticket 704 and upon authorization the product is provided to the consumer 702.

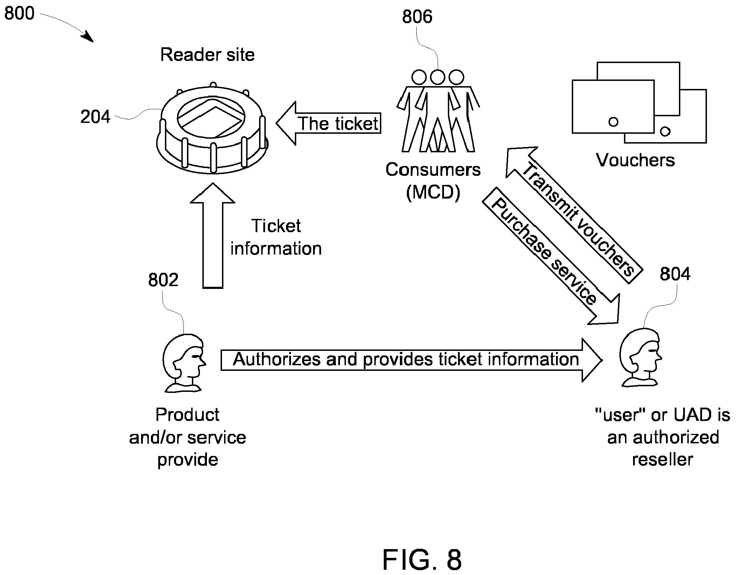

FIG. 8 is a process flow diagram illustrating a process and method 800 in accordance with another embodiment wherein a consumer of a product and a provider of the product utilize independent processes so that the product may be consumed anonymously by the consumer. Turning to FIG. 8, a product provider 802 provides ticket information to an authorized reseller 804 and to reader site 204 (or server 100). Product provider 802 is unaware of the identity of the actual consumer. Reseller 804 sells the product and corresponding voucher for a ticket to consumer 806. Reseller 804 does not share the identity of the consumer with Provider 802. Consumer 806 loads the voucher onto his/her MCD 202 and subsequently obtains a ticket. MCD 202 is then presented to a reader site reader 208a at reader site 204 so that the ticket can be exchanged for the product.

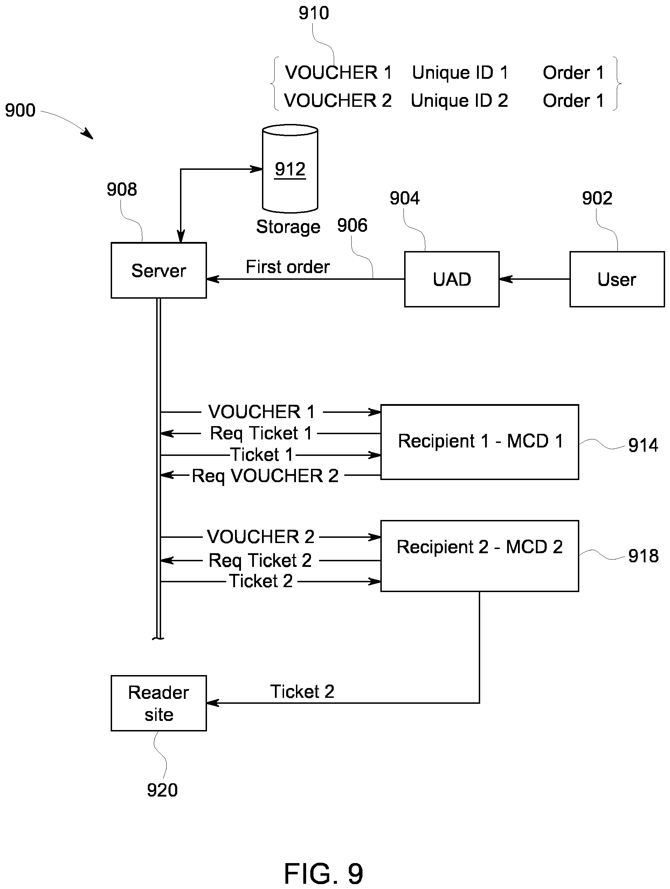

FIG. 9 is a schematic/process flow diagram illustrating a process or method in accordance with one embodiment. Turning now to FIG. 9, in accordance with one exemplary embodiment, a method or process 900 is conducted as follows: A user 902 such as a Facility Manager of a facility via a user access device (UAD) 904 such as a laptop, computer or mobile communications device (such as a smart phone) places a first order 906 for a Voucher/Ticket on behalf of a first recipient (recipient 1) to a server 908. The first order 906 may be for a Voucher/Ticket to provide Tenant with physical access to a facility manager by the user for which the user is a Facility Manager. The server 908 creates a First Voucher 910 and stores First Voucher 910 in storage system 912. Subsequently recipient 1 using a first MCD (MCD1) 914 receives the First Voucher 910 from the server 908. Subsequently recipient 1 requests a First Ticket from the server 908 and subsequent to that receives the First Ticket. Subsequent to that recipient 1 decides to issue a sub-Ticket (Second Ticket) to a visitor and requests a Second Voucher 916 from the server 908. Second Voucher 916 is transmitted to the second recipient 918. Subsequently the second recipient requests a Second Ticket from the server 908 and, in turn, receives a Second Ticket (subject to any procedures in place to verify and/or approve the delivery of the second ticket to second recipient (Visitor) 918. Subsequently the second recipient 918 uses the second Ticket at a reader site 920 to gain access to the facility.

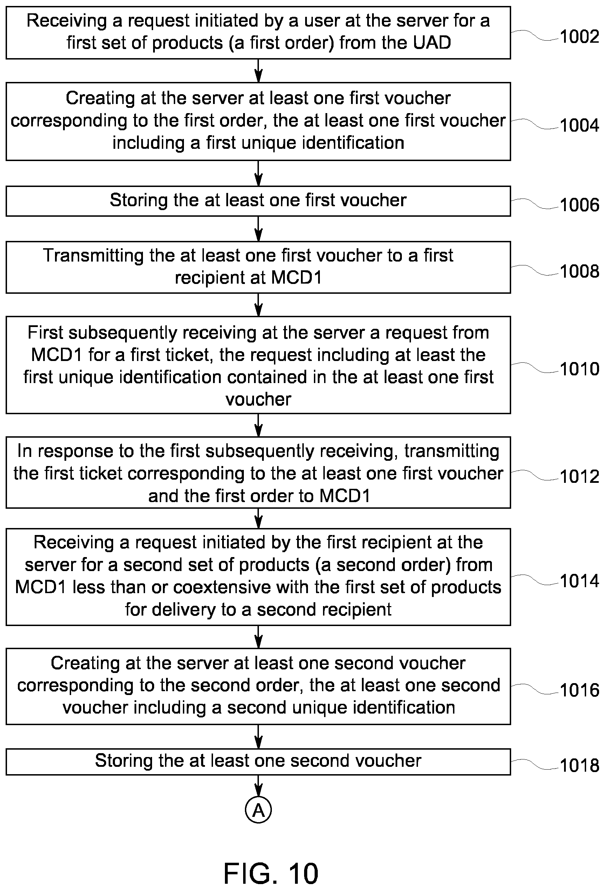

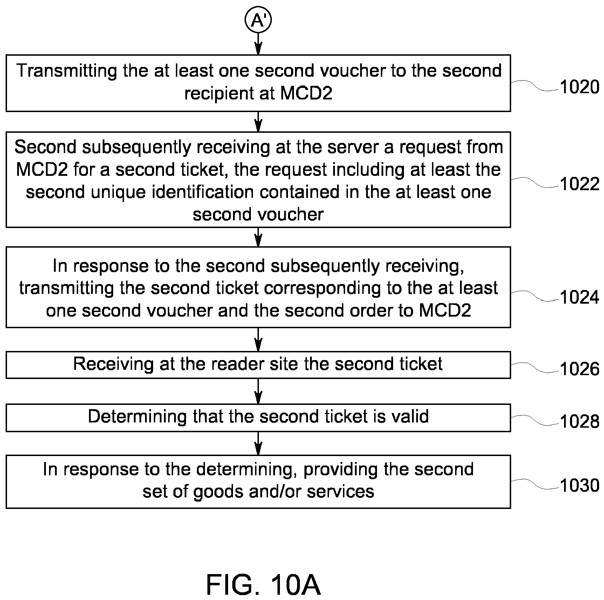

FIG. 10 is a process flow diagram illustrating a process or method in accordance with one embodiment. Turning now to FIG. 10, in accordance with one exemplary embodiment, a method or process 1000 is conducted as follows: At block 1002 the user initiates a request at the server for a first set of products using a UAD such as a laptop or smart phone or the like. The first set of products may include access rights at a facility as to allow someone to open one or more door locks or the like. The first set of products may alternatively include other goods and/or services and optionally access rights.

At block 1004 the server creates at least one first voucher corresponding to the first order and assigns the at least one first voucher a first unique identification such as a number or the like.

At block 1006 the server stores the at least one first voucher in associated storage such as a hard disk or cloud memory storage or the like.

At block 1008 the at least one first voucher is transmitted to a first recipient at a first MCD (MCD1). The transmission may be initiated automatically by the server or in response to a request from the MCD1.

At block 1010 a request for a First Ticket is received at the server from MCD1 subsequent to MCD1 receiving the at least one first voucher. The request includes at least the first unique identification associated with the at least one first voucher.

At block 1012 the server transmits a First Ticket corresponding to the received at least one first voucher and the first order to MCD1.

At block 1014 the server receives a request from the first recipient for a sub-Ticket for a second set of products (a second order) from first recipient's MCD1. The second order may be less than or coextensive with the first order, i.e., it may be for the same products or some lesser subset thereof. For example, in the tenant/facility context, the sub-Ticket may be for entry to an outer door and not to a garage, storage locker or tenant private area. The second order is for a sub-Ticket to be given to a Visitor (second recipient).

At block 1016 the server creates at least one second voucher corresponding to the second order and assigns it a second unique identification. Creation of the second voucher may be made contingent upon approval of a third party such as the original user or some designee thereof.

At block 1018 the server stores the at least one second voucher in associated storage such as a hard disk or cloud memory storage or the like.

At block 1020 the at least one second voucher is transmitted to a second recipient (Visitor) at a second MCD (MCD2). The transmission may be initiated automatically by the server or in response to a request from the MCD2.

At block 1022 a request for a Second Ticket is received at the server from MCD2 subsequent to MCD2 receiving the at least one second voucher. The request includes at least the second unique identification of the at least one second voucher.

At block 1024 the server transmits a Second Ticket corresponding to the received at least one second voucher and the second order to MCD2.

At block 1026, the reader at the Reader Site reads the Second Ticket from MCD2 and carries out a verification process to determine if the Ticket is valid for the Product(s) desired. The Reader Site may be pre-loaded with information with which to verify the Ticket or it may communicate with the Server after reading the Ticket.

At block 1028, the Reader Site determines that the Ticket is valid for the Product(s) desired. (Alternatively, of course, it may determine that the Ticket is not valid and optionally offer suggestions to the presenter of the Ticket via some sort of display or other audible or visually perceivable interface on how to proceed next to gain the desired access).

At block 1030, the Product(s) are provided.

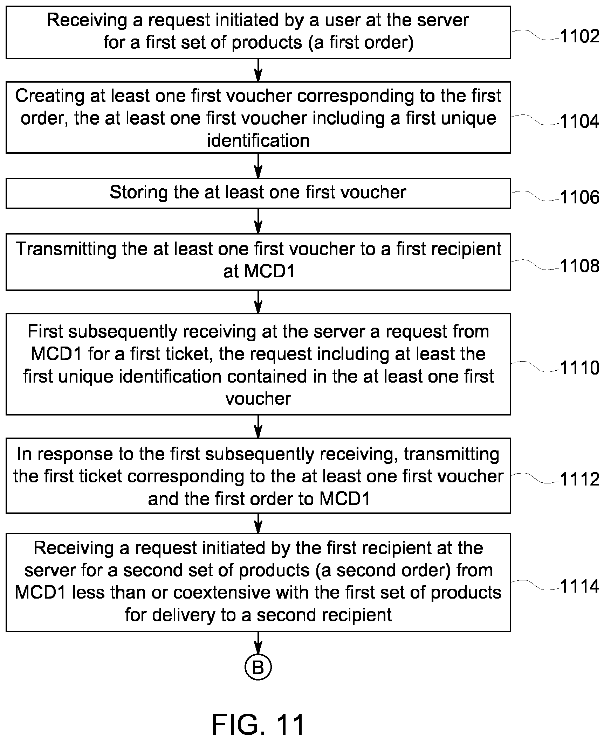

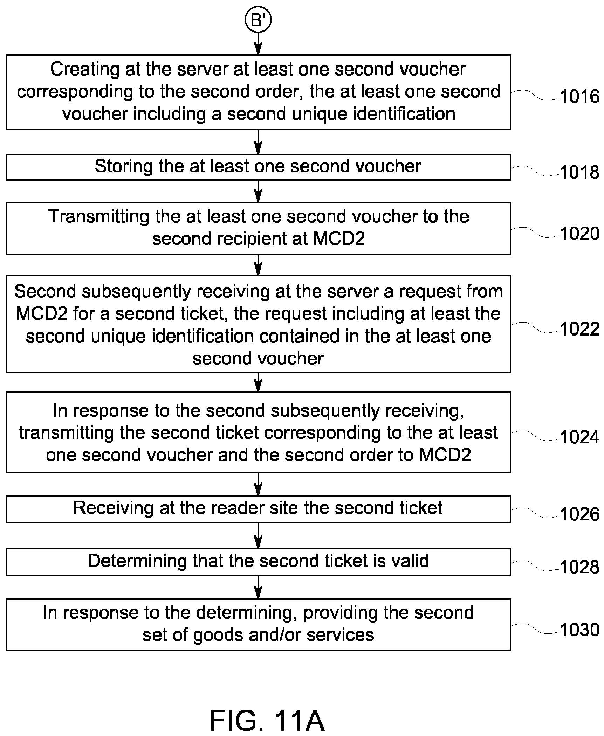

FIG. 11 is a process flow diagram illustrating a process or method in accordance with one embodiment. Turning now to FIG. 11, in accordance with one exemplary embodiment, a method or process 1100 is conducted as follows: At block 1102 the user initiates a request at the server for a first set of products. The first set of products may include access rights at a facility as to allow someone to open one or more door locks or the like. The first set of products may alternatively include other goods and/or services and optionally access rights.

At block 1104 the server creates at least one first voucher corresponding to the first order and assigns the at least one first voucher a first unique identification such as a number or the like.

At block 1106 the server stores the at least one first voucher in associated storage such as a hard disk or cloud memory storage or the like.

At block 1108 the at least one first voucher is transmitted to a first recipient at a first MCD (MCD1). The transmission may be initiated automatically by the server or in response to a request from the MCD1.

At block 1110 a request for a First Ticket is received at the server from MCD1 subsequent to MCD1 receiving the at least one first voucher. The request includes at least the first unique identification associated with the at least one first voucher.

At block 1112 the server transmits a First Ticket corresponding to the received at least one first voucher and the first order to MCD1.

At block 1114 the server receives a request from the first recipient for a sub-Ticket for a second set of products (a second order) from first recipient's MCD1. The second order may be less than or coextensive with the first order, i.e., it may be for the same products or some lesser subset thereof. For example, in the tenant/facility context, the sub-Ticket may be for entry to an outer door and not to a garage, storage locker or tenant private area. The second order is for a sub-Ticket to be given to a Visitor (second recipient).

At block 1116 the server creates at least one second voucher corresponding to the second order and assigns it a second unique identification. Creation of the second voucher may be made contingent upon approval of a third party such as the original user or some designee thereof.

At block 1118 the server stores the at least one second voucher in associated storage such as a hard disk or cloud memory storage or the like.

At block 1120 the at least one second voucher is transmitted to a second recipient (Visitor) at a second MCD (MCD2). The transmission may be initiated automatically by the server or in response to a request from the MCD2.

At block 1122 a request for a Second Ticket is received at the server from MCD2 subsequent to MCD2 receiving the at least one second voucher. The request includes at least the second unique identification of the at least one second voucher.

At block 1124 the server transmits a Second Ticket corresponding to the received at least one second voucher and the second order to MCD2.

At block 1126, the reader at the Reader Site reads the Second Ticket from MCD2 and carries out a verification process to determine if the Ticket is valid for the Product(s) desired. The Reader Site may be pre-loaded with information with which to verify the Ticket or it may communicate with the Server after reading the Ticket.

At block 1128, the Reader Site determines that the Ticket is valid for the Product(s) desired. (Alternatively, of course, it may determine that the Ticket is not valid and optionally offer suggestions to the presenter of the Ticket via some sort of display or other audible or visually perceivable interface on how to proceed next to gain the desired access).

At block 1130, the Product(s) are provided.

While exemplary embodiments and applications have been shown and described, it would be apparent to those skilled in the art having the benefit of this disclosure that numerous modifications, variations and adaptations not specifically mentioned above may be made to the various exemplary embodiments described herein without departing from the scope of the invention which is defined by the appended claims.

## Claims

1. A computer-implemented method (300, 400, 500, 600, 700, 800, 900) for providing electronic access to products, the method comprising:
receiving (302, 402, 1002, 1102) a request initiated by a user (804, 902) at a server (100, 908) for a first set of products comprising goods and/or service as a First Order (906) from a user access device (UAD, 202a, 904);
creating (304, 404, 1004, 1104) at the server (100, 908) at least one First Voucher (910) corresponding to the First Order (906), the at least one First Voucher (910) including a first unique identification;
storing (306, 406, 1006, 1106) the at least one First Voucher (910);
transmitting (308, 408), 1108, 1108 the at least one First Voucher (910) to a first recipient (806) at a first mobile computing device (MCD1, 202, 914);
first subsequently receiving (310, 410, 1010, 1110) at the server (100, 908) a request from the MCD1 (202, 914) for a First Ticket, the request including at least the first unique identification contained in the at least one First Voucher (910);
in response to the first subsequently receiving, transmitting (312, 412, 1012, 1112) the First Ticket corresponding to the at least one First Voucher (910) and the First Order (906) to the MCD1 (202, 914);
receiving a request (1014, 1114) initiated by the first recipient (806) at the server (100, 908) for a second set of products comprising goods and/services as a Second Order from the MCD1 (202, 914) less than or coextensive with the first set of products for delivery to a second recipient (806);
creating (1016) at the server (100, 908) at least one Second Voucher (916) corresponding to the Second Order, the at least one Second Voucher (916) including a second unique identification;
storing (1018) the at least one Second Voucher (916);
transmitting (1020) the at least one Second Voucher (916) to the second recipient at a second mobile computing device (MCD2, 918);
second subsequently receiving (1022) at the server (100, 908) a request from the MCD2 (918) for a Second Ticket, the request including at least the second unique identification contained in the at least one Second Voucher (916);
in response to the second subsequently receiving, transmitting (1024) the Second Ticket corresponding to the at least one Second Voucher (916) and the Second Order to the MCD2 (918);
receiving (1026) at the reader site (204, 920) the Second Ticket;
determining (1028) that the Second Ticket is valid; and
in response to the determining, providing (1030) the second set of goods and/or services.

2. The method of claim 1, further comprising:
contacting the user for permission to create the at least one Second Voucher (916) subsequent to receiving the request initiated by the first recipient (806) at the server (100, 908) for a second set of products as a Second Order.

3. The method of claim 1, wherein the first recipient (806) is the user (804, 902).

4. The method of claim 1, wherein the first recipient (801 is designated by the user (804, 902).

5. The method of claim 1, wherein the MCD1 (914) and the UAD (904) are the same device.

6. The method of claim 1, wherein the MCD1 (914) and the UAD (904) are different devices.
